# EUROPEAN PATENT SPECIFICATION

(11) **EP 3 348 679 B1**
(45) Date of publication and mention of the grant of the patent: **06.11.2019**
(21) Application number: 16843949.5
(22) Date of filing: 07.09.2016
(51) Int. Cl.: D01F 6/62, B60C 1/00, B60C 9/00, D02G 3/48, D02J 1/22, D01D 5/16, D01D 5/098

(54) **METHOD FOR PRODUCING PEF YARN, PEF YARN, AND TIRE**
VERFAHREN ZUR HERSTELLUNG EINES PEF-GARNS, PEF-GARN UND REIFEN
PROCÉDÉ DE PRODUCTION DE FIL DE PEF, FIL DE PEF ET PNEUMATIQUE ASSOCIÉ

(30) Priority: 08.09.2015 JP 2015177017
(43) Date of publication of application: 18.07.2018
(73) Proprietor: Bridgestone Corporation, Tokyo 104-8340 (JP); Synvina C.V., 1014 BV Amsterdam (NL)
(72) Inventor: IKEDA, Yuji, Tokyo 104-8340 (JP); SUGIMOTO, Kenichi, Tokyo 104-8340 (JP); NAKAJIMA, Hajime, 1014 BV Amsterdam (NL); VAN BERKEL, Jesper Gabriel, 1014 BV Amsterdam (NL)
(74) Representative: Oxley, Robin John George
(86) International application number: PCT/JP2016/004086
(87) International publication number: WO 2017/043082

(56) References cited:
- WO-A1-2014/204313
- WO-A1-2014/204313
- WO-A1-2015/105104
- JP-A- S6 147 816
- JP-A- H01 162 820
- JP-A- H04 119 119
- JP-A- H06 184 819
- JP-A- 2010 163 724
- JP-A- 2014 111 852
- JP-A- 2015 518 093
- US-A1- 2012 165 496
- US-A1- 2015 174 961
- US-B1- 6 511 747
- KINZO ISHIKAWA ET AL.: 'Kagaku Sen'i I', 20 March 1970 pages 167 - 181, XP009504845

## Description

### TECHNICAL FIELD

The present disclosure relates to a method for producing a polyethylene-2,5-furandicarboxylate (PEF) raw yarn, a PEF raw yarn, and a tire.

### BACKGROUND

Synthetic fibers made of nylon or polyethylene terephthalate (PET) have been widely used as fibers used for reinforcing cords etc. of tires. However, these synthetic fibers impose a large environmental burden because they are produced from raw materials of fossil origin.

This has led to recent development of fibers produced from raw materials of natural origin for use as fibers with a small environmental burden. For example, PTL 1 discloses a fiber made of polyethylene-2,5-furandicarboxylate (PEF) (PEF fiber).

### CITATION LIST

### Patent Literature

PTL 1: PTL 1: WO2014/204313

### SUMMARY

### (Technical Problem)

However, the PEF raw yarn described in PTL 1 is not sufficient in strength, and considering its application to fields that require high strength such as tire, further improvements in physical properties, particularly modulus of elasticity, of fiber have been required.

An object of the present disclosure is to provide a PEF raw yarn production method capable of providing a PEF raw yarn having a high storage modulus. Another object of the present disclosure is to provide a PEF raw yarn having a high storage modulus. A further object of the present disclosure is to provide a tire having improved uniformity and high-speed durability.

### (Solution to Problem)

The disclosed PEF raw yarn production method is directed to a method for producing a polyethylene-2,5-furandicarboxylate (PEF) raw yarn, which comprises a drawing step wherein an undrawn yarn, obtained by melt-spinning of a PEF-containing resin composition, is drawn into a PEF raw yarn, wherein a draw ratio in the drawing step is greater than 6.0 times.

With the disclosed PEF raw yarn production method, it is possible to provide a PEF raw yarn having a high storage modulus.

The PEF raw yarn production method further comprises: a spinning step wherein the PEF-containing resin composition which has been melted is extruded into filaments and bundled into the undrawn yarn; and a take-up step wherein the PEF raw yarn is taken up, wherein the ratio of a rate (T) of taking up the PEF raw yarn during the take-up step to a rate (E) of extrusion of the PEF-containing resin composition into filaments during the spinning step (T/E) is 700 to 2,000. The spinning and drawing steps of the method are conducted in a single-stage spinning/drawing process wherein the undrawn yarn is continuously drawn without being recovered to form the PEF raw yarn.

With this configuration, it is possible to provide a PEF raw yarn having a higher storage modulus.

In the disclosed PEF raw yarn production method, PEF in the PEF-containing resin composition preferably has an intrinsic viscosity of 0.50 to 1.50 dl/g.

With this configuration, it is possible to provide a PEF raw yarn having a higher storage modulus.

The disclosed PEF raw yarn is characterized by being obtainable by the disclosed PEF raw yarn production method.

The disclosed PEF raw yarn has a high storage modulus.

The disclosed PEF raw yarn preferably has a degree of crystallinity of 10% or more.

With this configuration, the PEF raw yarn has a higher storage modulus.

The disclosed PEF raw yarn preferably has a birefringence of 0.05 or more.

With this configuration, the PEF raw yarn has a higher storage modulus.

The disclosed PEF raw yarn preferably has a storage modulus of 1,500 MPa or more.

The disclosed PEF raw yarn preferably has a storage modulus of 2,500 MPa or more.

The disclosed tire is characterized by including a tire fiber that comprises the disclosed PEF raw yarn.

The disclosed tire has improved uniformity and high-speed durability.

### (Advantageous Effect)

According to the present disclosure, it is possible to provide a PEF raw yarn production method capable of providing a PEF raw yarn having a high storage modulus. According to the present disclosure, it is also possible to provide a PEF raw yarn having a high storage modulus. Further, according to the present disclosure, it is possible to provide a tire having improved uniformity and high-speed durability.

### BRIEF DESCRIPTION OF THE DRAWINGS

In the accompanying drawings:
FIG. 1 is a schematic view for explaining a PEF raw yarn production method according to an embodiment of the present disclosure;
FIG. 2 is a schematic view for explaining a PEF raw yarn production method according to another embodiment of the present disclosure; and
FIG. 3 is a schematic flowchart of a PEF raw yarn production method according to an embodiment of the present disclosure.

### DETAILED DESCRIPTION

The present disclosure will now be described in detail by way of embodiments.

### (PEF Raw Yarn Production Method)

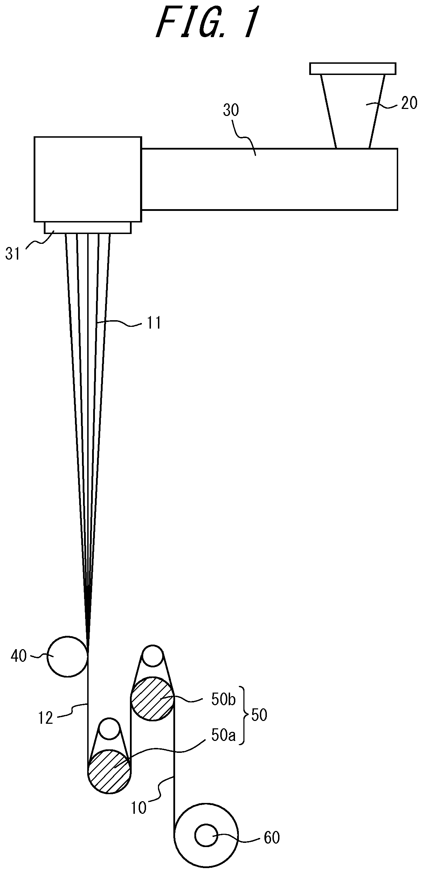

An embodiment of the disclosed PEF raw yarn production method comprises, as illustrated in FIG. 1, a single-stage spinning/drawing process wherein an undrawn yarn 12, obtained by melt-spinning of a PEF-containing resin composition (hereinafter also referred to as a "PEF composition"), is continuously drawn without being recovered to form a PEF raw yarn 10 and the PEF raw yarn 10 is taken up.

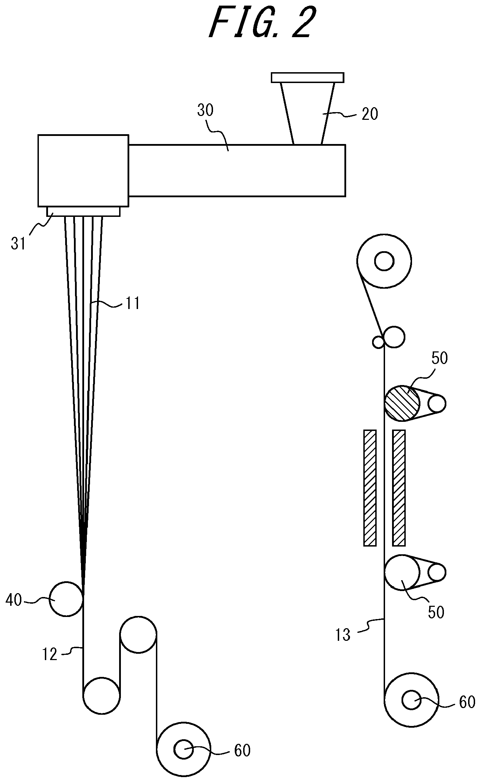

Another embodiment of the disclosed PEF raw yarn production method comprises, as illustrated in FIG. 2, a two-stage spinning/drawing process wherein an undrawn yarn 12, obtained by melt-spinning of a PEF-containing resin composition, is once recovered, after which the recovered undrawn yarn 12 is drawn into a PEF raw yarn 13 and taken up.

A PEF raw yarn production method that comprises the single-stage spinning/drawing process is advantageous in that PEF raw yarns can be efficiently produced in short time without incurring cost increase because a PEF raw yarn is produced through a sequence of steps without taking up a melt-spun undrawn yarn along the way. Further, the PEF raw yarn production method that comprises the single-stage spinning/drawing process easily enables drawing at high draw ratio as the drawing step is carried out before the microstructure of the undrawn yarn 12, obtained by melt-spinning of the resin composition, changes and stabilizes over time. Thus, a PEF raw yarn 10 having a high storage modulus can be easily obtained.

Each of the single-stage spinning/drawing process and second-stage spinning/drawing process may comprise a plurality of steps such as, for example, a PEF composition melting step, a spinning step, a drawing step, and a take-up step.

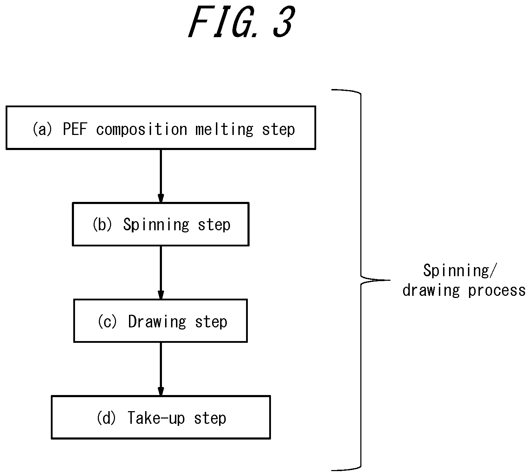

In each of the single-stage spinning/drawing process and second-stage spinning/drawing process, it is preferred that the PEF composition melting step (step (a) in FIG. 3), the spinning step (step (b) in FIG. 3), the drawing step (step (c) in FIG. 3), and the take-up step (step (d) in FIG. 3) are carried out in the order presented. The spinning step (step (b)), the drawing step (step (c)) and the take-up step (step (d)) may be carried out at the same time.

### <PEF Composition Melting Step>

The PEF composition melting step is a step wherein a PEF-containing resin composition (PEF composition) is prepared and melted.

The PEF composition comprises at least PEF and may further comprise other resins and additives. The PEF composition melting step is, for example, a step wherein a PEF composition prepared by mixing PEF and optionally other resins and additives is melted under heating. For example, as illustrated in FIGS. 1 and 2, the PEF composition can be melted by charging raw materials such as PEF into a hopper 20 and mixing them under heating.

The PEF is a polymer that comprises a building block represented by the following general formula, which is obtainable by polycondensation of monomer components including at least furan-2,5-dicarboxylic acid and ethylene glycol in the presence of a polymerization catalyst. One or two or more different types of PEF may be used in the PEF composition.

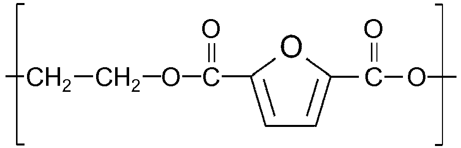

Alternatively, the PEF in the PEF composition may be produced for example through a first step wherein an ester compound is obtained by reacting monomer components including furan-2,5-dicarboxylic acid and ethylene glycol, and a second step wherein the ester compound is polycondensed in the presence of a polymerization catalyst. It is preferred that the second step is carried out under a reduced pressure of 5 to 700 Pa from the perspective of increased polycondensation reaction rate for obtaining PEF.

Examples of furan-2,5-dicarboxylic acid which is a possible raw material of PEF in the PEF composition include furan-2,5-dicarboxylic acids produced from cellulose, glucose or other plant source (biomass) using methods known in the art. The furan-2,5-dicarboxylic acid used in this reaction may be a furan-2,5-diester compound esterified with, for example, methanol or ethanol. Examples of ethylene glycol which is a possible raw material of PEF in the PEF composition include ethylene glycol and the like produced from bioethanol using methods known in the art.

From the perspective that PEF in the PEF composition imposes a much smaller environmental burden than synthetic resins such as PET which contains terephthalic acid synthesized from raw materials of fossil origin, it is preferred that the PEF is a biobased polymer (bioplastic, plastic prepared from biological resource), more preferably a 100% biobased polymer obtained by polycondensation of furan-2,5-dicarboxylic acid produced from cellulose, glucose or the like and ethylene glycol produced from bioethanol or the like.

The monomer components used for the synthesis of PEF in the PEF composition may further include, for example, terephthalic acid, 2,6-naphthalenedicarboxylic acid, propanediol, and butanediol. From the perspective of more improved storage modulus of the PEF raw yarn, however, it is preferred that the monomer components are only furan-2,5-dicarboxylic acid and ethylene glycol.

The molar ratio of furan-2,5-dicarboxylic acid to ethylene glycol (furan-2,5-dicarboxylic acid/ethylene glycol) in the monomer components is not particularly limited and can be appropriately selected according to the purpose; it preferably 1/3 to 1/1, and more preferably 1/2.5 to 1/1.5. A molar ratio of 1/3 or more results in improved adhesion between the PEF raw yarn and adhesive. A molar ratio of 1/1 or less results in the PEF having a terminal carboxylic acid amount that falls within a suitable range, so that polymer degradation during or after the production process can be limited.

The intrinsic viscosity of the PEF in the PEF composition is preferably 0.50 to 1.50 dl/g, more preferably 0.70 to 1.10 dl/g. When the intrinsic viscosity is 0.50 dl/g or more, the tenacity of the resulting PEF raw yarn increases, and when it is 1.50 dl/g or less, melt-spinning can be easily performed.

As used herein, "intrinsic viscosity" refers to a value measured by the method described in (Intrinsic Viscosity) in the section [Evaluations] described later.

The weight average molecular weight (Mw) of the PEF in the PEF composition is preferably 55,000 to 200,000, more preferably 62,000 to 180,000, and even more preferably 65,000 to 150,000. When the weight average molecular weight of PEF is 55,000 or more, the tenacity of the resulting PEF raw yarn increases, and when it is 200,000 or less, the melt viscosity of resin decreases, so that the extrusion pressure decreases and therefore spinning can be more easily carried out.

The weight average molecular weight is a value measured by GPC with polystyrene as a standard.

The terminal carboxylic acid amount of the PEF in the PEF composition is preferably 1 to 100 mmol/kg, and more preferably 20 to 100 mmol/kg. When the terminal carboxylic acid amount is 1 mmol/kg or more, the number of reaction sites on PEF at the time when it reacts with adhesives used upon formation of a composite with another member (e.g., tire rubber component) increases, so that the PEF has increased adhesion with adhesives (e.g., epoxy resin-based adhesives). When the terminal carboxylic acid amount is 100 mmol/kg or less, a high tenacity of the PEF raw yarn can be ensured even when it is subjected to high-temperature treatment (e.g., vulcanization of tire). The terminal carboxylic acid amount can be adjusted for example by changing the proportions of furandicarboxylic acid and ethylene glycol upon polycondensation or the molecular weight of PEF.

The terminal carboxylic acid amount refers to terminal carboxylic group content in mmol per kg of PEF which can be measured by the method described below.

2 g of PEF is dissolved in 50 mL of a 4:6 (weight ratio) mixed solution of phenol and trichloroethylene at 80°C and titrated with a mixed solution of 0.05N KOH and methanol to measure the terminal carboxyl group concentration (mmol/kg). Phenol red is used as an indicator for titration, and the time point where the phenol red turned rose pink from yellowish green is regarded as the end point of titration.

From the perspective of reducing the environmental burden, the PEF content in the PEF composition is preferably 80% by mass or more, and more preferably 100% by mass, based on the total amount (100% by mass) of all the resin components contained in the PEF composition. Further, the PEF content in the PEF composition is preferably 75% by mass or more, and more preferably 100% by mass, based on the total amount (100% by mass) of the PEF composition from the perspective of reducing the environmental burden.

Examples of other resins that may be optionally included in the PEF composition include polyamides (e.g., nylon), polyesters (e.g., polyethylene terephthalate, polyethylene naphthalate, polytrimethylene terephthalate (PTT), polybutylene terephthalate (PBT), polytrimethylene furanoate (PTF), polybutylene furanoate (PBF), and polylactic acid), polyolefins (e.g., polypropylene and polyethylene), and polyvinylidene chloride. These resins may be used alone or in combination.

Examples of additives that may be optionally included in the PEF composition include antioxidants, ultraviolet absorbers, light stabilizers, lubricants, antistatic agents, fillers, crosslinking agents, and nucleating agents. These additives may be used alone or in combination.

### <Spinning Step>

The spinning step is, for example, as illustrated in FIGS. 1 and 2, a step wherein the PEF composition obtained in the PEF composition melting step is extruded (melt-spun) through a die 31 of an extruder 30 into filaments 11 and the filaments 11 are coated with an oil agent by means of an oiling roller 40 and bundled into an undrawn yarn 12. In the spinning step, the filaments 11 may be subjected to a so-called interlacing process where the filaments 11 are entangled using air.

The extrusion temperature during the melt-spinning is preferably from 230°C to 320°C, and more preferably from 270°C to 300°C, from the perspective of maintaining the PEF composition in a molten state to ensure a viscosity that allows for easy discharge. When the extrusion temperature is 230°C or above, spinning can be easily performed, and when the extrusion temperature is 320°C or below, a PEF raw fiber with high tenacity can be obtained. The extrusion temperature is preferably 20°C to 110°C higher than the melting point of PEF.

The extrusion temperature refers to a temperature of the die 31 of the extruder 30.

The rate (E) at which the PEF composition is extruded into filaments during the melt-spinning is preferably 1 to 30 m/min.

The rate at which the PEF composition is extruded into filaments during the melt-spinning (extrusion rate) refers to a rate at which the filaments 11 are discharged from the die 31 of the extruder 30.

As illustrated in FIG. 1, the extruder 30 used in the melt-spinning is a device having at least one die 31.

The hole size (die hole diameter) (D) of the die 31 of the extruder 30 is preferably 0.1 to 3.0 mm. When the die hole diameter is 0.1 mm or more, spinning can be easily performed, and when it is 3.0 mm or less, a PEF raw yarn with high strength can be obtained.

The ratio of the length (L, unit: mm) of the channel of the die 31 to the die hole diameter (D, unit: mm) (L/D) is preferably 1 to 5.

Examples of oil agents applied by the oiling roller 40 include, from the perspective of facilitating the bundling of the filaments, silicone oil-based agents, fatty acid ester-based oil agents, higher alcohol-based oil agents, higher fatty acid-based oil agents, sulfuric acid ester-based oil agents, sulfonic acid-based oil agents, phosphoric acid ester-based oil agents, ether derivative-based oil agents, ester derivative-based oil agents, tertiary cation-based oil agents, quaternary cation-based surfactants, paraffins, and mineral oils.

### <Drawing Step>

The drawing step is a step wherein an undrawn yarn is drawn into a PEF raw yarn.

In the method that comprises the single-stage spinning/drawing process, the drawing step is, as illustrated in FIG. 1, for example, a step wherein the undrawn yarn 12 obtained in the spinning step is drawn through drawing rollers such as drawing rollers 50 to provide a PEF raw yarn 10. In the method that comprises the single-stage spinning/drawing process, the undrawn yarn 12 is continuously drawn without being recovered, after the undrawn yarn 12 has been obtained in the spinning step.

In the method that comprises the two-stage spinning/drawing process, the drawing step is, as illustrated in FIG. 2, for example, a step wherein the undrawn yarn 12 obtained in the spinning step is once recovered by the take-up machine 60, and the undrawn yarn 12 once recovered is then drawn through rollers such as drawing rollers 50.

The drawing can be carried out while heating the drawing rollers to a temperature higher than the glass-transition temperature (Tg) of resin. Heating treatment of the drawing rollers is advantageous in that undrawn yarns are heated when passing through the drawing rollers so as to be efficiently drawn.

The drawing can be carried out, for example, as illustrated in FIG. 1, using two or more drawing rollers 50 (drawing rollers 50a, 50b in the example of FIG. 1) operated at different rotation speeds (e.g., the downstream drawing roller 50b is rotated faster than the upstream drawing roller 50a).

While it is preferred in the drawing step to use drawing rollers known in the art designed for drawing, drawing can also be effected using other types of rollers. For example, undrawn yarns can be drawn by taking up the undrawn yarn faster than the extrusion rate with the undrawn yarn held on such rollers.

The draw ratio in the drawing step is not particularly limited as long as it is greater than 6.0 times and can be appropriately selected according to the purpose; it is preferably greater than 6.0 times to 10.0 times, and more preferably 6.5 times to 10.0 times. A draw ratio of greater than 6.0 times results in the resultant PEF raw yarn having a higher storage modulus, and a draw ratio that falls within the preferred or more preferred range is advantageous for the same reason.

The draw ratio can be adjusted for example by differentiating the rotation speeds of the drawing rollers 50a and 50b.

The draw ratio refers to a ratio of the length of an undrawn yarn prior to drawing to the length of the PEF raw yarn after drawing.

In the method that comprises the single-stage spinning/drawing process, the draw ratio is calcuated as Y/X when, as illustrated in FIG. 1, the undrawn yarn 12 bundled by means of the oiling roller 4 is drawn by length X to form the PEF raw yarn 10 having length Y.

In the method that comprises the two-stage spinning/drawing process, the draw ratio is calculated as Y/X when, as illustrated in FIG. 2, the undrawn yarn 12 once recovered is drawn by length X to form the PEF raw yarn 13 having length Y.

The temperature of the undrawn yarn during the drawing step is preferably greater than 80°C to 180°C from the perspective of more improved strength of the resulting PEF raw yarn. When the temperature is 80°C or below, the molecules show poor mobility and may not be aligned sufficiently. When the temperature is above 180°C, the molecules excessively flow and may not be aligned sufficiently.

### (Take-up Step)

The take-up step is a step wherein a PEF raw yarn is taken up.

The take-up step is, as illustrated in FIG. 1, for example, a step wherein the PEF raw yarn 10 after drawing is taken up by the take-up machine 60, or as illustrated in FIG. 2, for example, a step wherein the PEF raw yarn 13 after drawing is taken up by the take-up machine 60.

As used herein, the ratio of the rate (T) of taking up the PEF raw yarn during the take-up step to the rate (E) of extruding the PEF-containing resin composition into filaments during the spinning step (T/E) is referred to as "spin draft."

The spin draft is not particularly limited and can be appropriately selected depending on the purpose; it is preferably 700 to 2,000, and more preferably 1,400 to 2,000.

When the spin draft is 700 or more, the resultant PEF raw yarn has a higher storage modulus. When the spin draft is 2,000 or less, spinning can be easily carried out resulting in improved productivity. Spin draft that falls within the more preferred range is advantageous for the same reason.

The take-up rate is not particularly limited and can be appropriately selected according to the purpose; it preferably 50 to 3,000 m/min. In particular, when drawing is effected while heating the drawing rollers, it is preferable to set the take-up rate to 1,000 to 1,600 m/min. When drawing is effected by taking up the undrawn yarn faster than the extrusion rate using rollers other than drawing rollers, the take-up rate is preferably 2,000 to 3,000 m/min.

### <PEF Raw Yarn>

The disclosed PEF raw yarn is characterized by being obtainable by the disclosed PEF raw yarn production method.

The storage modulus of the disclosed PEF raw yarn is preferably 1,500 MPa or more (e.g., 1,500 to 5,000 MPa), and more preferably 2,500 MPa or more. When the storage modulus is 1,500 MPa or more, a tire manufactured using a rubber/fiber composite that comprises the PEF raw yarn has favorable uniformity and high-speed durability.

The filaments of the disclosed PEF raw yarn, extruded in the PEF raw yarn production method, preferably have a fineness (line density) per filament of 0.05 to 5.0 tex, more preferably greater than 0.2 to 3.0 tex, and even more preferably 0.2 to 2.0 tex, from the perspective that such a fineness is proper for fiber applications and that a fiber with superior physical properties are obtainable using the disclosed PEF raw yarn.

As used herein, fineness refers to a value measured by the method described in (Fineness) in the section [Evaluations] described later.

The tenacity of the disclosed PEF raw yarn is preferably 3.0 cN/dtex or more. Tenacity can be adjusted by changing the orientation or degree of crystallinity of the resin in the PEF raw yarn, for example by changing the draw ratio.

As used herein, tenacity refers to a value obtained by dividing the breaking tenacity of a PEF raw yarn pre-twisted 4 turns per 10 cm, measured in a tensile test at 25°C and 55% RH using a tensile tester, by the fineness.

The birefringence of the disclosed PEF raw yarn is preferably 0.05 to 0.4. When the birefringence is 0.05 or more, the PEF raw yarn shows improved orientation to the tensile direction and thus increased tenacity. If the birefringence is greater than 0.4, spinning may be difficult.

As used herein, birefringence refers to a value measured by the interference fringe method using a polarization microscope.

The degree of crystallinity of the disclosed PEF raw yarn is preferably 10% or more. When the degree of crystallization is 10% or more, the PEF raw yarn shows improved orientation to the tensile direction and thus increased tenacity.

As used herein, the degree of crystallinity is a value measured using an X-ray diffractometer.

### (Tire Fiber)

A tire fiber can be produced by spinning two or more PEF raw yarns, or one or more PEF raw yarns and one or more other raw yarns. The twist number when spinning the yarn is not particularly limited and can be appropriately selected according to the purpose. Further, a single PEF raw yarn can be used as a tire fiber.

The tire fiber is preferably used for a tire cord (e.g., carcass cord or belt cord).

The above other raw yarns are PEF-free raw yarns and examples thereof include polyamide raw yarns (e.g., nylon raw yarn), polyester raw yarns (e.g., PET raw yarn and PEN raw yarn), and rayon yarns.

A plurality of fibers including the tire fiber can be twisted together to form a tire cord. The tire cord may have a single-twist structure of the tire fiber or may have a layer- or multiple-twist structure of a plurality of fibers including the tire fiber that comprises the PEF raw yarn. Examples of fibers other than the tire fiber that comprises the PEF raw yarn used for layer- or multiple-twist structure include metal fibers such as steel fiber, resin fibers such as PET fiber, and glass fibers.

### <Rubber/Fiber Composite>

A rubber/fiber composite can be obtained by adhering a tire fiber that comprises the PEF raw yarn (or tire cord that comprises the PEF raw yarn) to a rubber component with an adhesive. The rubber/fiber composite is a composite of rubber and fiber, where an adhesive layer and a rubber layer are laminated around the tire fiber that comprises the PEF raw yarn (or tire cord that comprises the PEF raw yarn).

Examples of the adhesive include adhesives that comprise at least one compound selected from the group consisting of a thermoplastic polymer, a thermally reactive aqueous urethane resin, and an epoxide compound; and resorcin/formalin/latex adhesives.

Examples of the thermoplastic polymer include, for example, those whose backbone consists of at least one of an ethylenically addition polymer and an urethane-based polymer which are substantially free of addition reactive carbon-carbon double bonds and mainly comprise a linear structure, having at least one crosslinkable functional as a pendant group.

Examples of the thermally reactive aqueous urethane resin include, for example, resins having more than one thermally dissociable, blocked isocyanate group in one molecule.

Examples of the epoxide compound include, for example, compounds having two or more epoxy groups in one molecule.

### <Tire>

The disclosed tire is characterized by including a tire fiber that comprises the disclosed PEF raw yarn. The disclosed tire can be manufactured using the rubber/fiber composite.

The disclosed tire has improved uniformity and high-speed durability.

The rubber/fiber composite can be used for example as a carcass, belt, bead wire, insert, flipper, side reinforcement etc. of a tire.

### EXAMPLES

The present disclosure will now be described in detailed based on Examples, which however shall not be construed as limiting the scope of the present disclosure.

### (Examples 1, 2 and 4, and Comparative Example 1)

### <Production of PEF Raw Yarn>

A PEF composition consisting only of 100% biobased PEF (Mw: 75,600) with an intrinsic viscosity of 0.76 dl/g was melt-spun by passing it through a 96-hole die at an extrusion temperature of 275°C. The resultant 96 filaments were bundled into an undrawn yarn, which was continuously drawn without being recovered and taken up to afford a PEF raw yarn having a fineness of 1,100 dtex (11.5 dtex per filament). The draw ratio and spin draft were as set forth in Table 1. The time from the completion of extrusion of the filaments in the spinning step to the start of drawing of the undrawn yarn was not longer than 10 seconds.

### <Production of Tire Fiber>

First and second twists of two raw yarns of PEF thus obtained were twisted together at a twist number of 47 turns per 10 cm length to produce a tire fiber with a construction having a fineness of 1,100 dtex/2 and a twist number of 47 × 47 (turns per 10 cm).

### <Production of Tire Cord>

First and second twists of two tire fibers thus obtained were twisted together at a twist number of 47 turns per 10 cm length to produce a tire cord with a fineness of 1,100 dtex/2, twist number of 47 × 47 (turns per 10 cm) and cord count of 60 per 5 cm.

### <Manufacture of Tire>

The obtained tire cord was subjected to adhesive treatment described in WO2014/133174 to manufacture a tire cord for a carcass ply. A tire having a tire size of 195/65R15 was manufactured using the obtained tire cord for a carcass ply.

### (Example 3)

A PEF raw yarn and a tire were obtained as in Example 1 except that 100% biobased PEF having an intrinsic viscosity of 1.10 dl/g was used.

### (Example 5)

A PEF raw yarn and a tire were obtained as in Example 1 except that 100% biobased PEF having an intrinsic viscosity of 0.40 dl/g was used and that spin draft was set to 700.

### [Evaluations]

The PEFs used in Examples and Comparative Examples and the PEF raw yarns and tires obtained in Examples and Comparative Examples were subjected to measurements described below.

### (Intrinsic Viscosity)

According to the method in compliance with ASTM D4603, an intrinsic viscosity of PEF was measured using a 4:6 (weight ratio) mixture of phenol and trichloroethylene as solvent.

### (Storage Modulus)

One filament was taken out from the PEF raw yarn and measured for storage modulus (MPa) under the following measurement conditions using a dynamic viscoelasticity meter:
Initial strain: 1%
Amplitude: 0.1%
Frequency: 10 Hz
Temperature: 25°C

### (Fineness)

1 m of PEF raw yarn was sampled, dried at 130°C for 30 min, left to cool to room temperature in a dried desiccator, and weighed. Fineness was calculated with 1 g per 10,000 m defined as 1 dtex.

### (Degree of Crystallinity)

The degree of crystallinity of PEF raw yarn was measured by X-ray diffraction. X-ray analysis was performed using X-ray diffractometer (Rigaku RINT-TTR3, Cu-Kα ray, 50 kV tube voltage, 300 mA current, parallel beam method).

### (Birefringence)

The birefringence of PEF raw yarn was measured using an interference microscope available from Carl Zeiss. Specifically, sample was immersed in refractive index preparation liquid (Nichika Inc.), refractive indices in fiber axial direction and vertical direction were measured, and subtraction was performed. The refractive indices of the immersion liquid at room temperature were measured with 4T Abbe refractometer (Atago Co., Ltd.).

### (Uniformity)

Tire uniformity was tested as follows: using a balance machine tire balance was measured, and further, the tire was rotated at 12 rpm on a 1.6 m diameter drum to measure force variations of tire and drum shaft. In this way the uniformity of each tire was measured. In this test, force variations of tire and drum shaft occur when the tire has non-uniformity in circumferential direction.

The results were evaluated with the value of uniformity of Example 5 indexed to 100. In Table 1 larger index values indicate superior uniformity.

### (High-Speed Durability)

The tire was mounted on a specified rim, and a drum test was carried out at a specified internal pressure under a specified load. Starting from 120 km/h, the test speed was increased in increments of 10 km/h every 20 minutes, and the speed at which tire failure occurred was measured. The results were evaluated with the value of high-speed durability of Example 5 indexed to 100. In Table 1, larger index values indicate superior high-speed durability.

**Table 1**

| | | Ex. 1 | Ex. 2 | Ex. 3 | Ex. 4 | Ex. 5 | Comp. Ex. 1 |
|---|---|---|---|---|---|---|---|
| Production condition | PEF's intrinsic viscosity | 0.76 | 0.76 | 1.10 | 0.76 | 0.40 | 0.76 |
| | Spin draft | 1500 | 1500 | 1500 | 2000 | 700 | 1500 |
| | Draw ratio | 7.0 | 6.5 | 7.0 | 7.0 | 7.0 | 6.0 |
| Evaluations | Storage modulus (MPa) | 2000 | 1500 | 2200 | 2500 | 1200 | 1100 |
| | Degree of crystallinity (%) | 12 | 10 | 15 | 15 | 6 | 6 |
| | Birefringence (x10⁻³) | 150 | 60 | 150 | 170 | 45 | 40 |
| | Fineness (dtex) | 1100 | 1100 | 1100 | 1100 | 1100 | 1100 |
| | Uniformity (index) | 110 | 105 | 112 | 115 | 100 | 95 |
| | High-speed durability (index) | 110 | 105 | 112 | 115 | 100 | 95 |

### REFERENCE SIGNS LIST

10 PEF raw yarn
11 Filament
12 Undrawn yarn
13 PEF raw yarn
20 Hopper
30 Extruder
31 Die
40 Oiling roller
50 Drawing roller
50a Drawing roller
50b Drawing roller
60 Take-up machine

## Claims

1. A method for producing a polyethylene-2,5-furandicarboxylate (PEF) raw yarn, comprising:
a spinning step wherein a PEF-containing resin composition which has been melted is extruded into filaments and bundled into an undrawn yarn; and
a drawing step wherein the undrawn yarn, obtained by melt-spinning of the PEF-containing resin composition, is drawn into a PEF raw yarn,
wherein a draw ratio in the drawing step is greater than 6.0 times; and
the spinning and drawing steps are conducted in a single-stage spinning/drawing process wherein the undrawn yarn is continuously drawn without being recovered to form the PEF raw yarn; and
a take-up step wherein the PEF raw yarn is taken up,
wherein the ratio of a rate (T) of taking up the PEF raw yarn during the take-up step to a rate (E) of extrusion of the PEF-containing resin composition into filaments during the spinning step (T/E) is 700 to 2,000.

2. The method according to claim 1, wherein PEF in the PEF-containing resin composition has an intrinsic viscosity of 0.50 to 1.50 dl/g.

3. A PEF raw yarn obtainable by the method according to claim 1 or 2.

4. The PEF raw yarn according to claim 3, wherein the PEF raw yarn has a degree of crystallinity of 10% or more.

5. The PEF raw yarn according to claim 3, wherein the PEF raw yarn has a birefringence of 0.05 or more.

6. The PEF raw yarn according to claim 3, wherein the PEF raw yarn has a storage modulus of 1,500 MPa or more.

7. The PEF raw yarn according to claim 3, wherein the PEF raw yarn has a storage modulus of 2,500 MPa or more.

8. A tire comprising a tire fiber which comprises the PEF raw yarn according to any one of claims 3 to 7.

## Patentansprüche

1. Verfahren zur Herstellung eines Polyethylen-2,5-furandicarboxylat- (PEF) Rohgarns, umfassend:
einen Spinnschritt, wobei eine PEF enthaltende Harzzusammensetzung, die geschmolzen worden ist, zu Filamenten extrudiert und zu einem ungestreckten Garn gebündelt wird; und
einen Streckschritt, wobei das ungestreckte Garn, das durch Schmelzspinnen der PEF enthaltenden Harzzusammensetzung erhalten worden ist, zu einem PEF-Rohgarn gestreckt wird,
wobei ein Streckverhältnis im Streckschritt höher als das 6,0-fache ist; und
die Spinn- und Streckschritte in einem Einstufenspinn-/-streckvorgang ausgeführt werden, wobei das ungestreckte Garn kontinuierlich gestreckt wird, ohne gewonnen zu werden, um ein PEF-Rohgarn zu bilden; und
einen Aufnahmeschritt, wobei das PEF-Rohgarn aufgenommen wird,
wobei das Verhältnis einer Rate (T) der Aufnahme des PEF-Rohgarns während des Aufnahmeschritts zu einer Rate (E) der Extrusion der PEF enthaltenden Harzzusammensetzung zu Filamenten während des Spinnschritts (T/E) 700 bis 2000 beträgt.

2. Verfahren nach Anspruch 1, wobei PEF in der PEF enthaltenden Harzzusammensetzung eine intrinsische Viskosität von 0,50 bis 1,50 dl/g aufweist.

3. PEF-Rohgarn, erhältlich durch das Verfahren nach Anspruch 1 oder 2.

4. PEF-Rohgarn nach Anspruch 3, wobei das PEF-Rohgarn einen Kristallinitätsgrad von 10 % oder mehr aufweist.

5. PEF-Rohgarn nach Anspruch 3, wobei das PEF-Rohgarn eine Doppelbrechung von 0,05 oder mehr aufweist.

6. PEF-Rohgarn nach Anspruch 3, wobei das PEF-Rohgarn einen Speichermodul von 1.500 MPa oder mehr aufweist.

7. PEF-Rohgarn nach Anspruch 3, wobei das PEF-Rohgarn einen Speichermodul von 2.500 MPa oder mehr aufweist.

8. Reifen umfassend eine Reifenfaser, die das PEF-Rohgarn nach irgendeinem der Ansprüche 3 bis 7 umfasst.

## Revendications

1. Procédé de production d'un fil brut de polyéthylène-2,5-furandicarboxylate (PEF), comprenant:
une étape de filage où une composition de résine contenant du PEF qui a été fondue est extrudée en filaments et regroupés en un fil non étiré; et
une étape d'étirage dans laquelle le fil non étiré, obtenu par filage à l'état fondu de la composition de résine contenant du PEF, est étiré en un fil brut de PEF,
où un rapport d'étirage dans l'étape d'étirage est supérieur à 6,0 fois; et
les étapes de filage et d'étirage sont conduites dans un procédé de filage/étirage en un stade où le fil non étiré est continuellement étiré sans être récupéré pour former le fil brut de PEF; et
une étape de prélèvement dans laquelle le fil brut de PEF est prélevé,
où le rapport d'un taux (T) de prélèvement du fil brut de PEF durant l'étape de prélèvement à un taux (E) d'extrusion de la composition de résine contenant du PEF en filaments durant l'étape de filage (T/E) est de 700 à 2000.

2. Procédé selon la revendication 1, dans lequel le PEF dans la composition de résine contenant du PEF présente un indice limite de viscosité de 0,50 à 1,50 dl/g.

3. Fil brut de PEF pouvant être obtenu selon le procédé selon la revendication 1 ou 2.

4. Fil brut de PEF selon la revendication 3, le fil brut de PEF ayant un degré de cristallinité de 10 % ou plus.

5. Fil brut de PEF selon la revendication 3, le fil brut de PEF ayant une biréfringence de 0,05 ou plus.

6. Fil brut de PEF selon la revendication 3, le fil brut de PEF ayant un module d'élasticité en cisaillement au stockage de 1500 MPa ou plus.

7. Fil brut de PEF selon la revendication 3, le fil brut de PEF ayant un module d'élasticité en cisaillement au stockage de 2500 MPa ou plus.

8. Pneumatique comprenant une fibre de pneumatique qui comprend le fil brut de PEF selon l'une quelconque des revendications 3 à 7.
